# EUROPEAN PATENT APPLICATION

(11) **EP 3 269 991 A1**
(43) Date of publication of application: **17.01.2018**
(21) Application number: 16764659.5
(22) Date of filing: 25.02.2016
(51) Int. Cl.: F16D 3/223, F16D 3/20

(54) **FIXED CONSTANT VELOCITY UNIVERSAL JOINT AND METHOD FOR ASSEMBLING FIXED CONSTANT VELOCITY UNIVERSAL JOINT**

(30) Priority: 13.03.2015 JP 2015050764
(71) Applicant: NTN Corporation, Osaka-shi, Osaka 550-0003 (JP)
(72) Inventor: KOBAYASHI, Tomoshige, Iwata-shi Shizuoka 438-8510 (JP); ASANO, Yuichi, Iwata-shi Shizuoka 438-8510 (JP)
(74) Representative: Grünecker Patent- und Rechtsanwälte PartG mbB
(86) International application number: PCT/JP2016/055594
(87) International publication number: WO 2016/147829

(57) **Abstract**

Provided is a fixed type constant velocity universal joint, including: an outer joint member including a cup section having a radially inner surface in which a plurality of track grooves are formed, and a hollow shaft section extending from a bottom portion of the cup section in an axial direction of the outer joint member; an inner joint member having a radially outer surface in which a plurality of track grooves are formed, and having a radially inner hole formed in the inner joint member so as to allow one end of a shaft to be coupled into the inner joint member; a plurality of torque transmitting balls arranged in ball tracks formed of pairs of the plurality of track grooves of the outer joint member and the plurality of track grooves of the inner joint member; a cage interposed between the radially inner surface of the outer joint member and the radially outer surface of the inner joint member and configured to retain the plurality of torque transmitting balls; and a stopper configured to regulate a maximum operating angle by being brought into abutment against the shaft. The stopper is inserted into the hollow shaft section of the outer joint member until the fixed type constant velocity universal joint is mounted to a joint mounting device after the plurality of torque transmitting balls are incorporated and then the shaft is mounted to the fixed type constant velocity universal joint.

## Description

### Technical Field

The present invention relates to a fixed type constant velocity universal joint to be applied to automobiles and various other industrial machines, and to a method of assembling the fixed type constant velocity universal joint.

### Background Art

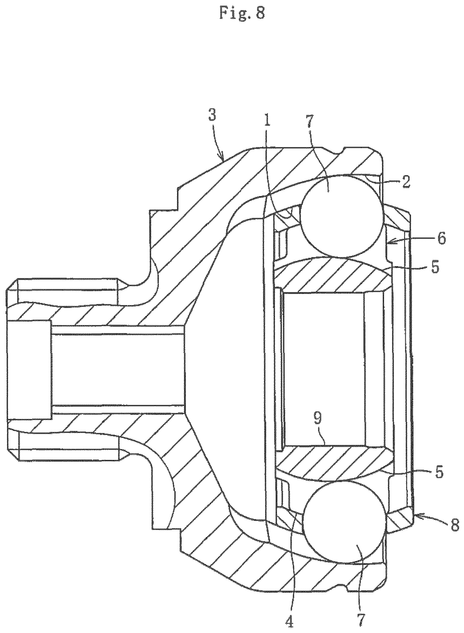

As illustrated in FIG. 8, a fixed type constant velocity universal joint includes an outer joint member 3 having a radially inner surface 1 in which a plurality of (for example, six) track grooves 2 are formed in an axial direction, an inner joint member 6 having a radially outer surface 4 in which a plurality of (six, for example) track grooves 5 are formed in the axial direction, a plurality of (six, for example) torque transmitting balls 7 arranged in ball tracks formed of pairs of the track grooves 2 of the outer joint member 3 and the track grooves 5 of the inner joint member 6, and a cage 8 interposed between the radially inner surface 1 of the outer joint member 3 and the radially outer surface 4 of the inner joint member 6 and configured to retain the torque transmitting balls 7. A shaft-fitting hole portion 9 is formed in the inner joint member 6, and an end portion of a shaft (not shown) is fitted along a radially inner surface of the shaft-fitting hole portion 9.

The fixed type constant velocity universal joint illustrated in FIG. 8 is a Birfield type (BJ) in which a groove bottom of each of track grooves is formed of a circular-arc portion. However, as types of fixed type constant velocity universal joints, there is also known an undercut-free type (UJ) in which each track groove is formed of a circular-arc portion and a straight portion. Further, in recent years, in some of those fixed type constant velocity universal joints, eight balls are used in order to achieve reduction in weight and size.

Those fixed type constant velocity universal joints normally have a maximum operating angle of 45° or more, and are mainly applied to a tire side of a drive shaft for a front wheel of an automobile. Further, those constant velocity universal joints are sometimes applied to a tire side of a drive shaft for a rear wheel of an automobile or to a propeller shaft for an automobile. When those constant velocity universal joints are applied to the drive shaft for the rear wheel or to the propeller shaft, unlike the case of applying those constant velocity universal joints to the drive shaft for the front wheel, it is not necessary to set the maximum operating angle to 45° or more. It is enough to set the maximum operating angle to 30° or less though this depends on vehicles.

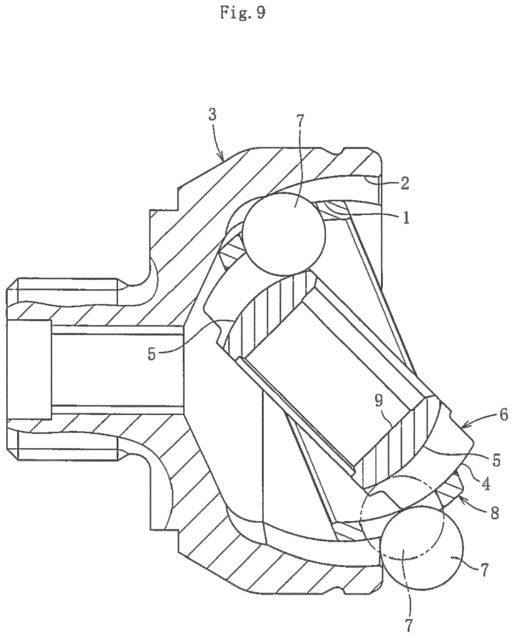

Accordingly, in order to achieve reduction in weight and cost, in some joints, there is used an outer joint member including a cup section having a length that is set to a small length for use in the drive shaft for the front wheel (it is enough for a cup section of an outer ring to have a length necessary for an angle corresponding to the maximum operating angle). However, in this case, while the constant velocity universal joint is carried, or while the constant velocity universal joint is mounted to a vehicle or the like, as illustrated in FIG. 9, the constant velocity universal joint forms an extremely large angle so that the balls 7 sometimes slip out of the track grooves 2 and 5. In order to prevent this, there have been proposed the related-art joints described in Patent Literature 1 to Patent Literature 7.

In Patent Literature 1, a shaft end portion of a shaft to be fitted into an inner joint member is extended, and the shaft end portion is caused to interfere with a bottom of a cup section of an outer joint member. In this manner, an operating angle is controlled. Further, in Patent Literature 2, a protruding portion (swelling portion) is formed on a shaft, and the protruding portion (swelling portion) is caused to interfere with an outer jointmember. In this manner, an operating angle is controlled. In Patent Literature 3, a cage includes an axially extended portion, and the extended portion is caused to interfere with a shaft. In this manner, an operating angle is controlled. In Patent Literature 4, a locking member is mounted to a cage, and the locking member is caused to interfere with a shaft. In this manner, an operating angle is controlled. In Patent Literature 5, Patent Literature 6, and Patent Literature 7, a ball falling preventing member is mounted so as to be held in abutment against a joint-opening-side end surface of an inner joint member, and the ball falling preventing member is brought into abutment against balls. In this manner, an operating angle is controlled.

### Citation List

Patent Literature 1: JP 03-113124 A
Patent Literature 2: JP 2001-280359 A
Patent Literature 3: JP 2008-215403 A
Patent Literature 4: JP 2008-215404 A
Patent Literature 5: JP 2010-138977 A
Patent Literature 6: JP 2010-127338 A
Patent Literature 7: JP 2011-80556 A

### Summary of Invention

### Technical Problem

In Patent Literature 1, the shaft end portion of the shaft is extended so that the shaft end portion has a longer length than necessary. This leads to increase in weight of the shaft.

Further, in Patent Literature 2, it is necessary to form the protruding portion (swelling portion) on the shaft. Such a shaft to be coupled to the constant velocity universal joint is manufactured by performing cutting work on a blank having a diameter larger than that of a manufactured shaft. Accordingly, the joint including the protruding portion as described in Patent Literature 2 requires the blank to have a large diameter before the shaft is formed (before cutting work is performed). This increases cost.

In Patent Literature 3, it is necessary to axially extend the cage. Consequently, the cage is formed into a special shape, and a size and a weight of the cage itself and cost are increased.

When a separate member is mounted to the cage or the inner joint member as described in Patent Literature 4 to Patent Literature 7, the cage or the inner joint member is increased in weight, and cost is increased. In particular, the member described in Patent Literature 7 is also brought into abutment against the shaft. Accordingly, the member is increased in size, and thus increased in weight. In addition, the configuration described in Patent Literature 7 is effective when the maximum operating angle is set to a large angle, but is less likely to be effective when it is desired that the operating angle be set to a small angle.

Therefore, in view of the above-mentioned circumstances, it is an object of the present invention to provide a fixed type constant velocity universal joint capable of preventing falling of balls until the fixed type constant velocity universal joint is mounted to a joint mounting device and of preventing increase in weight and cost, and a method of assembling the fixed type constant velocity universal joint.

### Solution to Problem

According to one embodiment of the present invention, there is provided a fixed type constant velocity universal joint comprising: an outer joint member comprising a cup section having a radially inner surface in which a plurality of track grooves are formed, and a hollow shaft section extending from a bottom portion of the cup section in an axial direction of the outer joint member; an inner joint member having a radially outer surface in which a plurality of track grooves are formed, and having a radially inner hole formed in the inner joint member so as to allow one end of a shaft to be coupled into the inner joint member; a plurality of torque transmitting balls arranged in ball tracks formed of pairs of the plurality of track grooves of the outer joint member and the plurality of track grooves of the inner joint member; a cage interposed between the radially inner surface of the outer joint member and the radially outer surface of the inner joint member and configured to retain the plurality of torque transmitting balls; and a stopper configured to regulate a maximum operating angle by being inserted into the hollow shaft section of the outer joint member and brought into abutment against the shaft until the fixed type constant velocity universal joint is mounted to a joint mounting device after the plurality of torque transmitting balls are incorporated and then the shaft is mounted to the fixed type constant velocity universal joint.

The fixed type constant velocity universal joint according to the present invention comprises the stopper configured to regulate the maximum operating angle until the fixed type constant velocity universal joint is mounted to the joint mounting device such as a vehicle after the balls are incorporated, that is, after a sub-assembly comprising the outer joint member, the inner joint member, the cage, and the balls is assembled, and then the shaft is mounted to the fixed type constant velocity universal joint. The stopper is inserted into the shaft section of the outer joint member, and is brought into abutment against the shaft so as to disable the fixed type constant velocity universal joint from forming a larger operating angle than necessary. In this manner, the stopper can regulate the maximum operating angle. In addition, it is only necessary to bring the stopper into abutment against the shaft. Accordingly, it is not necessary to design the shaft, the cage, and the like into special components, and existing components can be used.

Further, the stopper according to the present invention is removable. After the constant velocity universal joint is mounted to the joint mounting device, the constant velocity universal joint does not form a larger angle than necessary, in other words, does not form an angle causing falling of the balls. Consequently, there is no need to regulate the maximum operating angle. Accordingly, the stopper can be removed under a state in which the constant velocity universal joint is mounted to the joint mounting device. That is, the stopper according to the present invention can be used only when the constant velocity universal joint may forma larger operating angle than necessary.

The cup section of the outer joint member may have an axial length that is set to a small length for use in a rear-wheel drive mechanism of an automobile. That is, even when the axial length dimension of the cup section of the outer joint member is set to a small dimension, falling of the balls can be effectively prevented. Further, the maximum operating angle may be set to 30° or less.

In the above-mentioned configuration, the fixed type constant velocity universal joint may further comprise: a thread portion formed in a radially outer surface of the stopper; and another thread portion formed in a radially inner surface of the hollow shaft section so as to be threadedly engaged with the stopper. Further, the stopper may be press-fitted into a radially inner surface of the hollow shaft section. With this configuration, the stopper is fixed to the radially inner surface of the shaft section.

In the above-mentioned configuration, at least a part of the shaft on the hollow shaft section side may be hollow, and the stopper may extend into a radially inner side of the shaft. In this case, the fixed type constant velocity universal joint may further comprise: a thread portion formed in the stopper; and another thread portion formed in a radially inner side of the shaft so as to be threadedly engaged with the stopper. With this configuration, the stopper is fixed to the radially inner surface of the shaft.

In the above-mentioned configuration, the number of the torque transmitting balls may be set to any one of five to eight. Further, a groove bottom of each of the track grooves may be formed of only a circular-arc portion, or the groove bottom of each of the track grooves may be formed of a circular-arc portion and a straight portion.

According to one embodiment of the present invention, there is provided a method of assembling a fixed type constant velocity universal j oint comprising a stopper configured to regulate a maximum operating angle, the method comprising: incorporating, into a cup section of an outer joint member, internal components comprising an inner joint member, a cage, and torque transmitting balls; fitting a shaft into the inner joint member; and inserting the stopper into a shaft section of the outer joint member to bring a distal end portion of the stopper into abutment against the shaft until the fixed type constant velocity universal joint is mounted to a joint mounting device.

According to the method of assembling the fixed type constant velocity universal joint of the present invention, the stopper can regulate the maximum operating angle in such a manner that the stopper is inserted into the shaft section of the outer joint member and the distal end portion is brought into abutment against the shaft until the fixed type constant velocity universal joint is mounted to the joint mounting device such as a vehicle after the balls are incorporated, that is, after the sub-assembly comprising the outer joint member, the inner joint member, the cage, and the balls is assembled, and then the shaft is mounted to the fixed type constant velocity universal joint. As described above, it is only necessary to bring the stopper into abutment against the shaft. Accordingly, it is not necessary to design the shaft, the cage, and the like into special components, and existing components can be used. Further, the stopper can be removed under the state in which the constant velocity universal joint is mounted to the joint mounting device, and the stopper can be used only when the constant velocity universal joint may form a larger operating angle than necessary.

### Advantageous Effects of Invention

Until the fixed type constant velocity universal joint according to the present invention is mounted to the joint mounting device, the stopper regulates the maximum operating angle so that the fixed type constant velocity universal joint cannot form a larger operating angle than necessary. Accordingly, falling of the balls can be effectively prevented. Further, existing components can be used as the shaft and the cage. As a result, increase in weight and cost can be prevented. In addition, the stopper can be used only when the fixed type constant velocity universal joint may form a larger operating angle than necessary. Accordingly, the stopper is removed under the state in which the constant velocity universal joint is mounted to the joint mounting device, thereby being capable of obtaining a lightweight constant velocity universal joint.

Even when the axial length dimension of the cup section of the outer joint member is set to a small dimension for use in a rear-wheel drive mechanism of an automobile, falling of the balls can be effectively prevented, and further reduction in weight and cost can be achieved because the axial length dimension of the cup section is set to the small dimension.

When the stopper is fixed to the radially inner surface of the shaft section, the stopper can be prevented from, for example, slipping off, and stabilizes a function of preventing falling of the balls. Further, when the stopper extends into the radially inner side of the shaft, it is not necessary to set a length dimension and a radial dimension of the stopper with high accuracy. In addition, when the stopper and the shaft are threadedly engaged with each other, the stopper is fixed to the radially inner surface of the shaft. Thus, the operating angle can be reduced effectively.

The number of the torque transmitting balls can be set to any one of five to eight. Consequently, a large degree of design freedom is obtained, thereby achieving excellent designability. Further, the groove bottom of each of the track grooves may be formed of only the circular-arc portion, or the groove bottom of each of the track grooves may be formed of the circular-arc portion and the straight portion. That is, the present invention is applicable to various types of fixed type constant velocity universal joints.

In the method of assembling a fixed type constant velocity universal joint according to the present invention, until the fixed type constant velocity universal joint is mounted to the joint mounting device, the fixed type constant velocity universal joint cannot form a larger operating angle than necessary. Accordingly, falling of the balls can be effectively prevented. Further, the increase in weight and cost can be prevented.

### Brief Description of Drawings

FIG. 1 is a sectional view for illustrating a fixed type constant velocity universal joint according to a first embodiment of the present invention.
FIG. 2 is a sectional view for illustrating a method of assembling the fixed type constant velocity universal joint of FIG. 1 and illustrating an assembled state of a sub-assembly.
FIG. 3 is a sectional view for illustrating the method of assembling the fixed type constant velocity universal joint of FIG. 1 and illustrating a state in which a shaft is fitted into an inner joint member.
FIG. 4 is a sectional view for illustrating a state in which the fixed type constant velocity universal joint forms a maximum operating angle of 30° and the shaft is held in abutment against a stopper.
FIG. 5 is a sectional view for illustrating a state in which the fixed type constant velocity universal joint of FIG. 1 is mounted to a wheel bearing.
FIG. 6 is a sectional view for illustrating a fixed type constant velocity universal joint according to a second embodiment of the present invention.
FIG. 7 is a sectional view for illustrating a fixed type constant velocity universal joint according to a third embodiment of the present invention.
FIG. 8 is a sectional view for illustrating a related-art fixed type constant velocity universal joint.
FIG. 9 is a sectional view for illustrating a state in which balls of the fixed type constant velocity universal joint of FIG. 8 slip off.

### Description of Embodiments

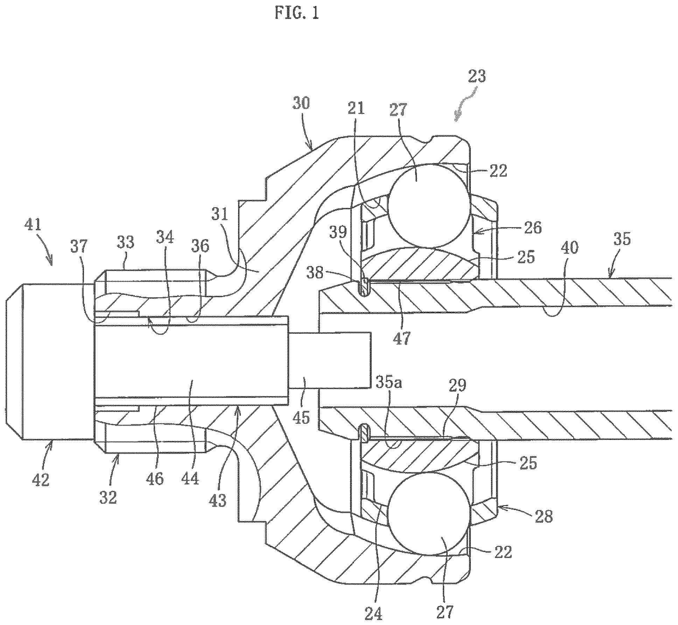

Now, description is made of embodiments of the present invention with reference to FIG. 1 to FIG. 7.

A fixed type constant velocity universal joint according to the present invention is illustrated in FIG. 1. The fixed type constant velocity universal joint comprises an outer joint member 23 having a radially inner surface 21 in which a plurality of track grooves 22 are formed in an axial direction, an inner joint member 26 having a radially outer surface 24 in which a plurality of track grooves 25 are formed in the axial direction, a plurality of torque transmitting balls 27 arranged in ball tracks formed of pairs of the track grooves 22 of the outer joint member 23 and the track grooves 25 of the inner joint member 26, and a cage 28 interposed between the radially inner surface 21 of the outer joint member 23 and the radially outer surface 24 of the inner joint member 26 and configured to retain the torque transmitting balls 27.

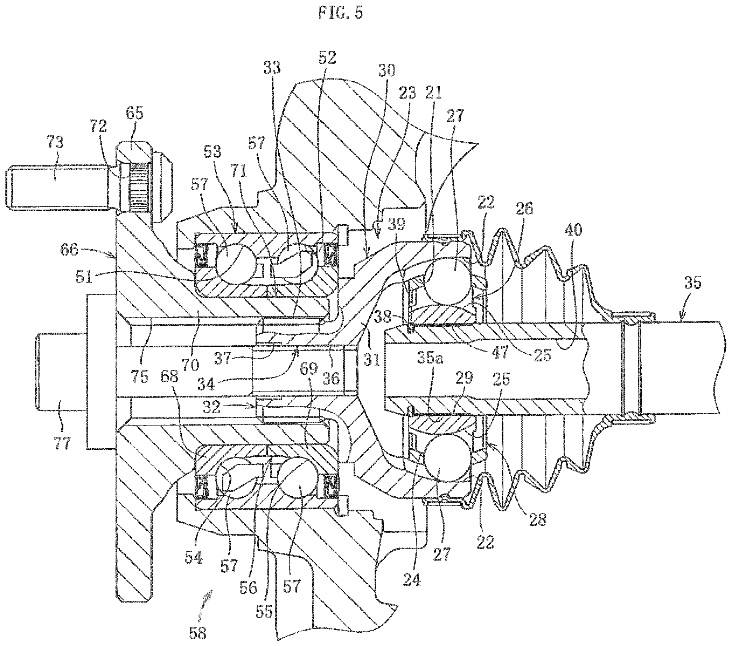

The outer joint member 23 comprises a cup section 30 having the track grooves 22 formed therein, and a shaft section (stem section) 32 formed continuously with a bottom wall 31 of the cup section 30. A track groove bottom of each of the track grooves 22 is formed of only a circular-arc portion. A male spline 33 is formed in the stem section 32 of the outer joint member 23, and the male spline 33 is fitted to a female spline 75 formed in a radially inner surface of a shaft section 70 of a hub wheel 66 as described later with reference to FIG. 5. Further, a hole portion 34 is formed in a radially inner side of the stem section 32. The hole portion 34 passes through the stem section 32, and comprises a female thread portion 36 formed on a cup section side of the hole portion 34, and a large-diameter hole portion 37 formed on a side of the hole portion 34 opposite to the cup section side thereof.

A shaft-fitting hole portion 29 is formed in the inner joint member 26, and a female spline 47 is formed in a radially inner surface of the shaft-fitting hole portion 29. Further, a track groove bottom of each of the track grooves 25 of the inner joint member 26 is also formed of only a circular-arc portion. That is, the constant velocity universal joint illustrated in FIG. 1 is a so-called Rzeppa type constant velocity universal joint. The number of the torque transmitting balls may be set to any one of five to eight.

A distal male spline 35a of a shaft 35 is fitted into the shaft-fitting hole portion 29 of the inner joint member 26, and the distal male spline 35a is fitted to the female spline 47 of the inner joint member 26. The shaft 35 has a radially inner hole portion 40 formed therein, and thus has a hollow shape. Further, a circumferential groove 38 is formed in an end portion of the distal male spline 35a, and a snap ring 39 is mounted in the circumferential groove 38.

A stopper 41 configured to regulate a maximum operating angle is mounted in the hole portion 34 of the stem section 32 of the outer joint member 23. The stopper 41 comprises a head portion 42 and a shaft portion 43. Further, the shaft portion 43 comprises a body portion 44 and a distal end portion 45. A male thread portion 46 is formed in the body portion 44. The stopper 41 is fitted and fixed to the stem section 32 of the outer joint member 23 by threadedly engaging the male thread portion 46 with the female thread portion 36 of the hole portion 34 of the stem section 32. Further, the distal end portion 45 has a diameter smaller than a diameter of the body portion 44, and extends into the radially inner hole portion 40 of the shaft 35.

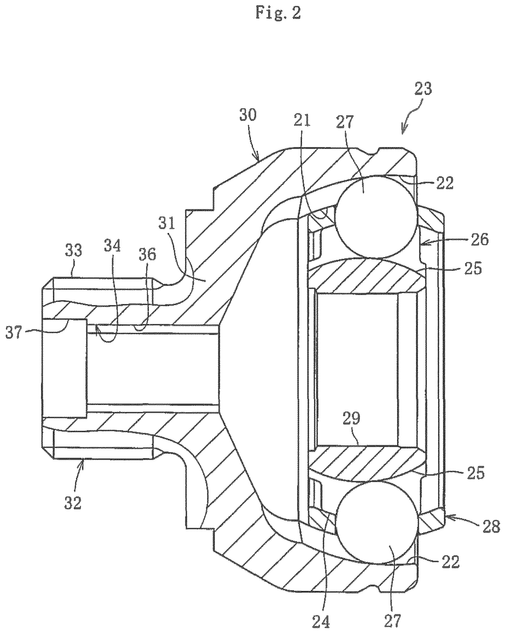

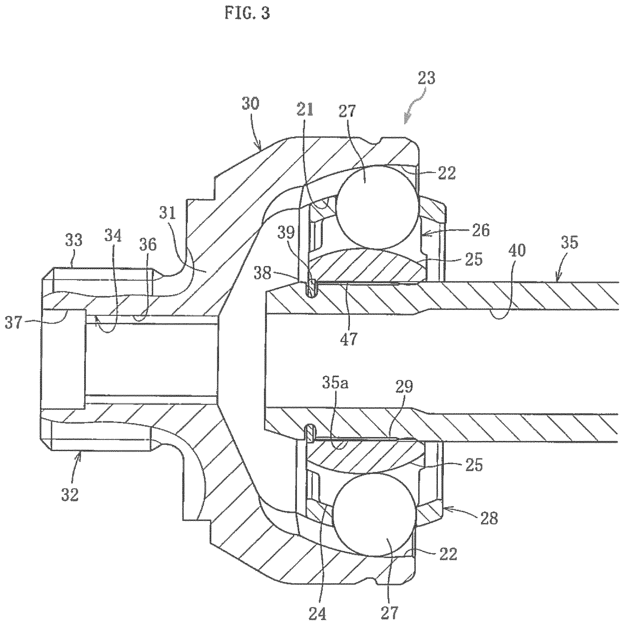

Next, description is made of a method of assembling the constant velocity universal joint illustrated in FIG. 1. First, as illustrated in FIG. 2, a sub-assembly is assembled by incorporating internal components, which comprise the inner joint member 26, the balls 27, and the cage 28, into the cup section 30 of the outer joint member 23. Next, as illustrated in FIG. 3, the distal male spline 35a of the shaft 35 is fitted into the shaft-fitting hole portion 29 so that the distal male spline 35a and the female spline 47 of the inner joint member 26 are fitted to each other. Under a state in which the shaft 35 is fitted into the inner joint member 26, the snap ring 39 is engaged with the circumferential groove 38 of the shaft 35 so as to prevent the shaft 35 from slipping off.

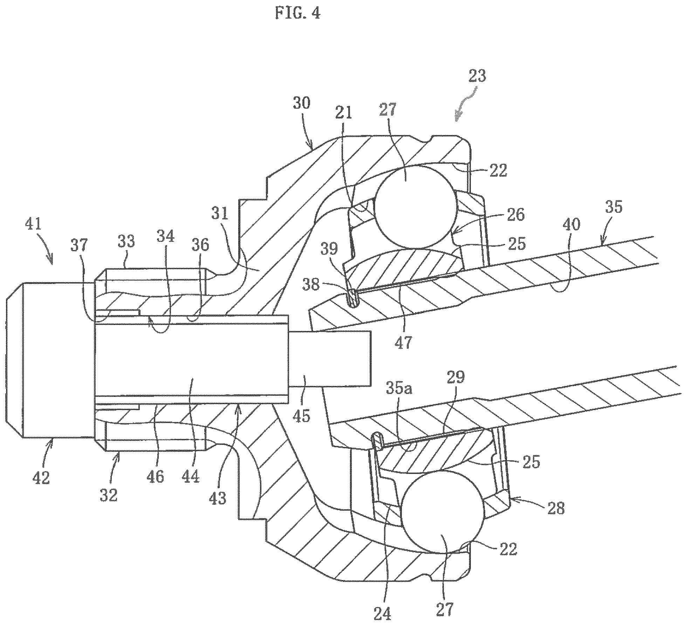

After that, as illustrated in FIG. 1, the stopper 41 is inserted into the hole portion 34 of the stem section 32 of the outer joint member 23. That is, the male thread portion 46 of the stopper 41 is threadedly engaged with the female thread portion 36 of the stem section 32. When the constant velocity universal joint having the above-mentioned configuration forms an operating angle, as illustrated in FIG. 4, the radially inner surface of the shaft 35 is brought into abutment against the distal end portion 45 of the stopper 41.

In this manner, the maximum operating angle is regulated.

A state in which the constant velocity universal joint is mounted to a joint mounting device is illustrated in FIG. 5. In the first embodiment, the joint mounting device is a wheel bearing 58 that is mounted to a vehicle. The wheel bearing 58 comprises an outer member 53 comprising a plurality of outer raceway surfaces 51 and 52 formed on an inner circumferential side of the wheel bearing 58, an inner member 56 comprising a plurality of inner raceway surfaces 54 and 55 formed on an outer circumferential side of the wheel bearing 58, and rolling elements 57 arranged between the outer raceway surfaces 51 and 52 of the outer member 53 and the inner raceway surfaces 54 and 55 of the inner member 56 that are opposed to the outer raceway surfaces 51 and 52 of the outer member 53. The stem section 32 of the outer joint member 23 of the constant velocity universal joint is fitted into the inner member 56 of the wheel bearing 58.

The inner member 56 comprises the hub wheel 66 comprising a wheel mounting flange 65, and comprises a pair of inner rings 68 and 69 externally fitted and mounted to the hub wheel 66. That is, the hub wheel 66 comprises the shaft section 70 having a tubular shape, and the flange 65 formed on a radially outer surface of the shaft section 70. Further, a stepped portion 71 is formed on an inboard-side portion of the radially outer surface of the shaft section 70 with respect to the flange 65, and the inner rings 68 and 69 are externally fitted to the stepped portion 71. The inner raceway surfaces 54 and 55 are formed in radially outer surfaces of the inner rings 68 and 69, respectively. Further, a bolt mounting hole 72 is formed in the flange 65, and a hub bolt 73 configured to fix a wheel and a brake rotor to the flange 65 is mounted in the bolt mounting hole 72.

The female spline 75 is formed in the radially inner surface of the shaft section 70 of the hub wheel 66. When the stem section 32 of the outer joint member 23 is fitted into the shaft section 70, the male spline 33 of the stem section 32 of the outer joint member 23 is fitted to the female spline 75. Further, a screw member 77 is inserted into the shaft section 70, and the screw member 77 is threadedly engaged with the female thread portion 36 of the stem section 32 of the outer joint member 23. In this manner, the stem section 32 of the outer joint member 23 of the constant velocity universal joint is fitted and fixed into the inner member 56 of the wheel bearing 58.

After the constant velocity universal joint is mounted to the wheel bearing 58 as illustrated in FIG. 5, the constant velocity universal joint does not form a larger angle than necessary, in other words, the constant velocity universal joint does not form an angle causing falling of the balls 27. Thus, it is not necessary to regulate the maximum operating angle. Accordingly, the stopper 41 (see FIG. 1) is removed, and the screw member 77 is inserted instead so that the constant velocity universal joint is mounted to the wheel bearing 58. In this manner, the stopper 41 can be used only when the constant velocity universal joint may form a larger operating angle than necessary, that is, only until the constant velocity universal joint is mounted to the wheel bearing 58 after the balls are incorporated and then the shaft is mounted to the constant velocity universal joint.

According to the present invention, there is used the stopper 41 that is inserted into the stem section 32 of the outer joint member 23 and is brought into abutment against the shaft 35 until the constant velocity universal joint is mounted to the wheel bearing 58 after the balls are incorporated. Thus, the stopper 41 regulates the maximum operating angle so that the constant velocity universal joint cannot form a larger operating angle than necessary. Accordingly, falling of the balls 27 can be effectively prevented. In addition, it is only necessary to bring the stopper 41 into abutment against the shaft 35. Thus, it is not necessary to design the shaft 35, the cage 28, and the like into special components, and existing components can be used. As a result, increase in weight and cost can be prevented. In addition, the stopper 41 can be used only when the constant velocity universal joint may form a larger operating angle than necessary. Accordingly, the stopper 41 is removed under a state in which the constant velocity universal joint is mounted to the wheel bearing 58, thereby being capable of obtaining a lightweight constant velocity universal joint.

Accordingly, even when an axial length dimension of the cup section 30 of the outer joint member 23 is set to a small dimension so as to allow the constant velocity universal joint to form only the maximum operating angle of 30° or less, falling of the balls 27 can be effectively prevented. Thus, reduction in weight and cost can be achieved because the axial length dimension is set to the small dimension. Therefore, the constant velocity universal joint is optimum for use in a rear-wheel drive mechanism of an automobile that adopts the cup section 30 of the outer joint member 23, which has a smaller axial length dimension.

According to the present invention, for example, the maximum operating angle can be set to 30° or less, and adjustment of the maximum operating angle can be set freely selectively. Accordingly, there can be provided the fixed type constant velocity universal joint capable of setting, in accordance with a device using the fixed type constant velocity universal joint, the operating angle to be equal to or smaller than an angle that is needed and causes no falling of the balls. In addition, the number of the balls 27 can be set to any one of five to eight. Consequently, a large degree of design freedom is obtained, thereby achieving excellent designability.

Further, as illustrated in FIG. 1, the male thread portion 46 is formed in the radially outer surface of the stopper 41, and the female thread portion 36 to be threadedly engaged with the stopper 41 is formed in the radially inner surface of the stem section 32. Accordingly, the stopper 41 is fixed to the radially inner surface of the stem section 32. Thus, the stopper 41 can be prevented from, for example, slipping off, and stabilizes a function of preventing falling of the balls 27. Further, the distal end portion 45 of the stopper 41 extends into the radially inner side of the shaft 35. Thus, it is not necessary to set a length dimension and a radial dimension of the stopper 41 with high accuracy.

In the first embodiment, there is described the Birfield type constant velocity universal joint in which the groove bottom of each of the track grooves 22 and 25 is formed of only the circular-arc portion, but a fixed type undercut-free constant velocity universal joint may be also adopted. That is, the groove bottom of each of the track grooves 22 of the outer joint member 23 is formed of a circular-arc portion and a straight portion, and the groove bottom of each of the track grooves 25 of the inner joint member 26 is formed of a straight portion and a circular-arc portion formed on a joint opening side.

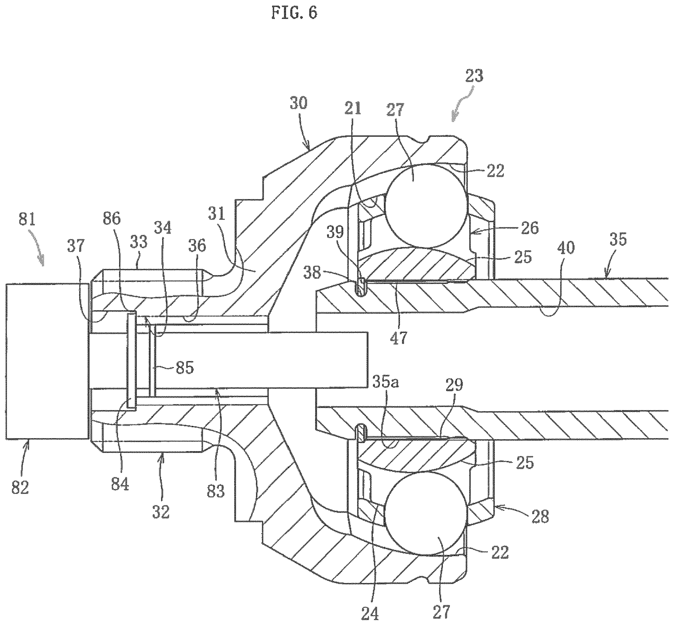

In the first embodiment, the stopper is fixed by being threadedly engaged with the radially inner surface of the stem section. However, in a second embodiment of the present invention, as illustrated in FIG. 6, a stopper 81 may be fixed by being press-fitted into the radially inner surface of the stem section 32. In the second embodiment, the stopper 81 comprises a head portion 82 and a shaft portion 83. In the second embodiment, the shaft portion 83 is not threaded. The shaft portion 83 comprises two protruding portions, that is, a first protruding portion 84 and a second protruding portion 85 protruding radially. In the hole portion 34 of the stem section 32, the first protruding portion 84 is brought into abutment against a shoulder portion 86 formed between the female thread portion 36 and the large-diameter hole portion 37, and the second protruding portion 85 is brought into press-contact with the radially inner surface of the female thread portion 36. In this manner, the stopper 81 is fitted and fixed to the stem section 32 of the outer joint member 23. Further, the shaft portion 83 extends into the radially inner hole portion 40 of the shaft 35.

The other components of the fixed type constant velocity universal joint illustrated in FIG. 6 are the same as those of the fixed type constant velocity universal joint illustrated in FIG. 1. Accordingly, the same components as those of the constant velocity universal joint illustrated in FIG. 1 are denoted by the same reference symbols as those of FIG. 1, and description thereof is omitted. The fixed type constant velocity universal joint according to the second embodiment illustrated in FIG. 6 can obtain the same operations and effects as those of the fixed type constant velocity universal joint according to the first embodiment illustrated in FIG. 1.

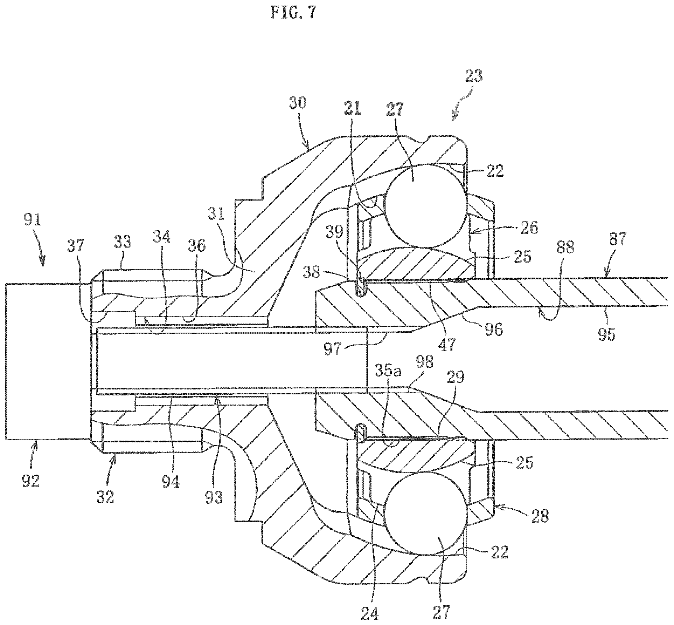

In the first embodiment, the stopper is fixed to the radially inner surface of the stem section. However, in a third embodiment of the present invention, as illustrated in FIG. 7, a stopper 91 may be fixed to the radially inner surface of the shaft 87. In the third embodiment, the stopper 91 comprises a head portion 92 and a shaft portion 93. A male thread portion 94 is formed in the shaft portion 93. Further, the shaft 87 has a radially inner hole portion 88 formed therein, and thus has a hollow shape. The radially inner hole portion 88 comprises a large-diameter hole portion 95, a tapered hole portion 96, and a small-diameter hole portion 97 in the stated order from the joint opening side. A female thread portion 98 is formed in the small-diameter hole portion 97. The stopper 91 is fitted and fixed to the shaft 87 in such a manner that the male thread portion 94 formed in the shaft portion 93 of the stopper 91 is threadedly engaged with the female thread portion 98 formed in the small-diameter hole portion 97 of the shaft 87.

The other components of the fixed type constant velocity universal joint illustrated in FIG. 7 are the same as those of the fixed type constant velocity universal joint illustrated in FIG. 1. Accordingly, the same components as those of the constant velocity universal joint illustrated in FIG. 1 are denoted by the same reference symbols as those of FIG. 1, and description thereof is omitted. The fixed type constant velocity universal joint according to the third embodiment illustrated in FIG. 7 can obtain the same operations and effects as those of the fixed type constant velocity universal joint according to the first embodiment illustrated in FIG. 1. In addition, in the fixed type constant velocity universal joint according to the third embodiment, the stopper 91 is fixed to the shaft 87. Thus, the operating angle can be reduced effectively.

The first to third embodiments of the present invention are described above. However, the present invention is not limited to the first to third embodiments, and various modifications can be made. For example, a material for the stopper is not particularly limited, and a resin such as reinforced plastic or a metal may be used. That is, it is only necessary that the stopper has strength capable of regulating the operating angle without being broken through abutment against (interference with) the shaft. A radial dimension and an axial dimension of the shaft portion of the stopper may be set freely selectively. The stopper can be collected and reused after the constant velocity universal joint is mounted to the joint mounting device. Thus, cost can be reduced.

It is not necessary that the stopper is always mounted until the constant velocity universal joint is mounted to the joint mounting device after the balls are incorporated and then the shaft is mounted to the joint. The stopper may be temporarily mounted by the time the constant velocity universal joint is mounted to the joint mounting device. Further, the shaft may be solid, or may be partially hollow so as to comprise a recessed portion that is open to the stem section side. When the shaft is solid, the stopper is brought into abutment against any position of the shaft, and thus can regulate the maximum operating angle.

### Industrial Applicability

The joint mounting device is not limited to a vehicle, and may comprise various industrial machines. Further, the outer joint member is not limited to use in a rear-wheel drive mechanism of an automobile. Further, the maximum operating angle to be regulated is not limited to 30° or less, and may be set to various angles.

### Reference Signs List

- 21: radially inner surface
- 22, 25: track groove
- 23: outer joint member
- 24: radially outer surface
- 26: inner joint member
- 27: torque transmitting ball
- 28: cage
- 30: cup section
- 32: stem section
- 35, 87: shaft
- 36,: 46 thread portion
- 41, 81, 91: stopper
- 58: wheel bearing
- 94, 98: thread portion

## Claims

1. A fixed type constant velocity universal joint, comprising:
an outer joint member comprising
a cup section having a radially inner surface in which a plurality of track grooves are formed, and
a hollow shaft section extending from a bottom portion of the cup section in an axial direction of the outer joint member;
an inner joint member having a radially outer surface in which a plurality of track grooves are formed, and having a radially inner hole formed in the inner joint member so as to allow one end of a shaft to be coupled into the inner joint member;
a plurality of torque transmitting balls arranged in ball tracks formed of pairs of the plurality of track grooves of the outer joint member and the plurality of track grooves of the inner joint member;
a cage interposed between the radially inner surface of the outer joint member and the radially outer surface of the inner joint member and configured to retain the plurality of torque transmitting balls; and
a stopper configured to regulate a maximum operating angle by being inserted into the hollow shaft section of the outer joint member and brought into abutment against the shaft until the fixed type constant velocity universal joint is mounted to a joint mounting device after the plurality of torque transmitting balls are incorporated and then the shaft is mounted to the fixed type constant velocity universal joint.

2. The fixed type constant velocity universal joint according to claim 1, wherein the cup section of the outer joint member has an axial length that is set to a small length for use in a rear-wheel drive mechanism of an automobile.

3. The fixed type constant velocity universal joint according to claim 1 or 2, wherein the maximum operating angle is set to 30° or less.

4. The fixed type constant velocity universal joint according to any one of claims 1 to 3, further comprising:
a thread portion formed in a radially outer surface of the stopper; and
another thread portion formed in a radially inner surface of the hollow shaft section so as to be threadedly engaged with the stopper.

5. The fixed type constant velocity universal joint according to any one of claims 1 to 3, wherein the stopper is press-fitted into a radially inner surface of the hollow shaft section.

6. The fixed type constant velocity universal joint according to any one of claims 1 to 5,
wherein at least a part of the shaft on the hollow shaft section side is hollow, and
wherein the stopper extends into a radially inner side of the shaft.

7. The fixed type constant velocity universal joint according to claim 6, further comprising:
a thread portion formed in the stopper; and
another thread portion formed in a radially inner side of the shaft so as to be threadedly engaged with the stopper.

8. A method of assembling a fixed type constant velocity universal joint comprising a stopper configured to regulate a maximum operating angle, the method comprising:
incorporating, into a cup section of an outer joint member, internal components comprising an inner joint member, a cage, and torque transmitting balls;
fitting a shaft into the inner joint member; and
inserting the stopper into a shaft section of the outer joint member to bring a distal end portion of the stopper into abutment against the shaft until the fixed type constant velocity universal joint is mounted to a joint mounting device.
